(19) Europäisches Patentamt / European Patent Office / Office européen des brevets

(11) **EP 3 184 830 B1**

(12) **EUROPEAN PATENT SPECIFICATION**

| | |
|---|---|
| (45) Date of publication and mention of the grant of the patent: **19.09.2018 Bulletin 2018/38** | (51) Int Cl.: ***F16C 1/20*** *(2006.01)* |

(21) Application number: **16203248.6**

(22) Date of filing: **09.12.2016**

(54) **CABLE OF A REMOTE CONTROL ASSEMBLY**

KABEL EINER FERNBEDIENUNGSANORDNUNG

CÂBLE D'UN ENSEMBLE DE COMMANDE A DISTANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2015 US 201514976597**

(43) Date of publication of application:
**28.06.2017 Bulletin 2017/26**

(73) Proprietor: **Kongsberg Power Products Systems I, Inc**
**Willis, TX 77378 (US)**

(72) Inventor: **Waddell, Dave**
**Marietta, GA 30064 (US)**

(74) Representative: **Uexküll & Stolberg**
**Partnerschaft von**
**Patent- und Rechtsanwälten mbB**
**Beselerstraße 4**
**22607 Hamburg (DE)**

(56) References cited:
**EP-A2- 0 834 662        JP-A- 2003 021 130**
**JP-U- S56 122 814**

**Description**

BACKGROUND OF THE INVENTION

1. Field of the Invention

The present invention generally relates to a core element for use in a cable of a remote control assembly, such as disclosed in JP S 56-122814 U.

2. Description of the Related Art

Various core elements have been developed for many applications, such as, but not limited to, use in a cable (also known as a push-pull cable) for a remote control assembly. Typical use of remote control assemblies includes, but is not limited to, automotive applications such as control of automatic transmissions, accelerators, clutches, cruise controls, HVAC vents, marine vehicles, aircraft vehicles, and the like. The cable of the remote control assembly typically includes a conduit and a core element with the conduit secured to an end fitting adapted to be attached to a support. The core element is slideably disposed within the conduit. Each of these applications typically includes the transmission of motion in a curved path by the core element.

During movement of the core element within the conduit, the core element is subjected to tension and compression from repeated loading and unloading. In such applications, the core element is specifically designed to endure certain tension, compression, and fatigue limits. To exceed these limits, current designs are expensive and time consuming to manufacture.

As such, there remains an opportunity to design a core element that is able to withstand higher tension, compression, and fatigue limits. Also, there remains an opportunity to design a core element with a simpler construction for easing manufacturing, for reducing costs, and for obtaining the proper tension, compression, and fatigue limit requirements.

JP 2003-21130 A shows a cable with a central wire and a plurality of intermediate wires distributed around the central wire. Distributed about the outer periphery of the arrangement of intermediate wires are outer wires with a thick diameter and outer wires with a smaller diameter in an alternating manner in circumferential direction. Adjacent wires of smaller diameter are separated by the thicker wires.

EP 0 834 662 A2 describes an inner cable for push-pull control cables. The cable comprises a core composed of a single wire and a plurality of main strands spirally wound around the core in such a manner that the strands are not in contact with each other. A plurality of secondary strands is arranged between the main strands. The diameter of each of the main strands is larger than that of each of the secondary strands.

SUMMARY OF THE INVENTION AND ADVANTAGES

A cable of a remote control assembly according to the invention includes conduit defining an interior and a length, and a core element disposed within the interior of the conduit. The core element has a central wire extending along a longitudinal axis. The central wire defines a first diameter and a length extending along the longitudinal axis. The core element also includes a plurality of outer wires surrounding and coupled to the central wire along the length. Each of the outer wires define a second diameter less than the first diameter. The core element further includes a plurality of intermediate wires surrounding and coupled to the central wire along the length and coupled to the plurality of outer wires along the length. The plurality of intermediate wires is sandwiched between both the central wire and the plurality of outer wires. Each of the intermediate wires defines a third diameter less than the second diameter. The plurality of intermediate wires surround said central wire with each of said intermediate wires engaging two other of said intermediate wires about said central wire along said length. The plurality of outer wires surround said intermediate wires with each of said outer wires engaging two other of said outer wires about said intermediate wires along said length. The central wire, the plurality of intermediate wires, and the plurality of outer wires collectively define a core element diameter with said core element diameter defined by the formula: $CED = D1 + (2 * D2) + (2 * D3)$ wherein CED is said core element diameter, D1 is said first diameter, D2 is said second diameter, and D3 is said third diameter; wherein said D1 is 41.5% to 43.5% of said CED, wherein said D3 is from about 10.5% to 10.7% of said CED, and wherein said D2 is from about 17.5% to 18.5% of said CED.

Accordingly, the core element of the cable is able to withstand higher tension, compression, and fatigue limits. Additionally, the core element has a simpler construction for ease of manufacturing, for reducing costs, and for obtaining the proper tension, compression, and fatigue limit requirements. Further, the first diameter of the central wire, the second diameter of each of the outer wires being less than the first diameter, and the third diameter of each of the intermediate wires being less than the second diameter enables the core element to obtaining the proper tension, compression, and fatigue limit requirements.

BRIEF DESCRIPTION OF THE DRAWINGS

Other advantages of the present invention will be readily appreciated, as the same becomes better understood by reference to the following detailed description when considered in connection with the accompanying drawings.

FIG. 1 is a fragmented side view of a remote control assembly.
FIG. 2 is a fragmented side view of the remote control assembly with a sheath and a liner of a conduit of the remote control assembly shown in cross section.
FIG. 3 is a fragmented perspective view of the remote control assembly with a portion of the sheath removed and a portion of the liner removed.
FIG. 4 is a perspective view of a core element of the remote control assembly.
FIG. 5 is a perspective view of the core element with a portion of a plurality of outer wires of the core element removed and a portion of a plurality of intermediate wires of the core element removed.
FIG. 6 is a perspective view of the core element with one of the intermediate wires shaded to illustrate an intermediate pitch length, and with one of the outer wires shaded to illustrate an outer pitch length.
FIG. 7 is a cross-sectional view of the core element.
FIG. 8 is a graphical representation of an s-n curve from a tensile test of the core element.

DETAILED DESCRIPTION OF THE INVENTION

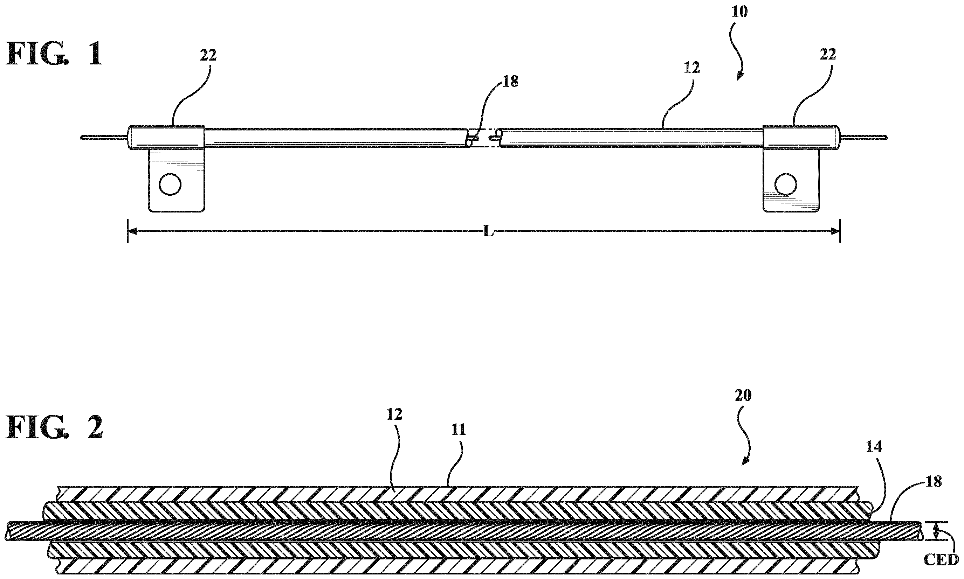

With reference to the Figures, wherein like numerals indicate like parts throughout the several views, a remote control assembly 10 is shown in FIG. 1. Typical use of remote control assemblies includes, but is not limited to, automotive applications such as control of automatic transmissions, accelerators, clutches, cruise controls, HVAC vents, and the like.

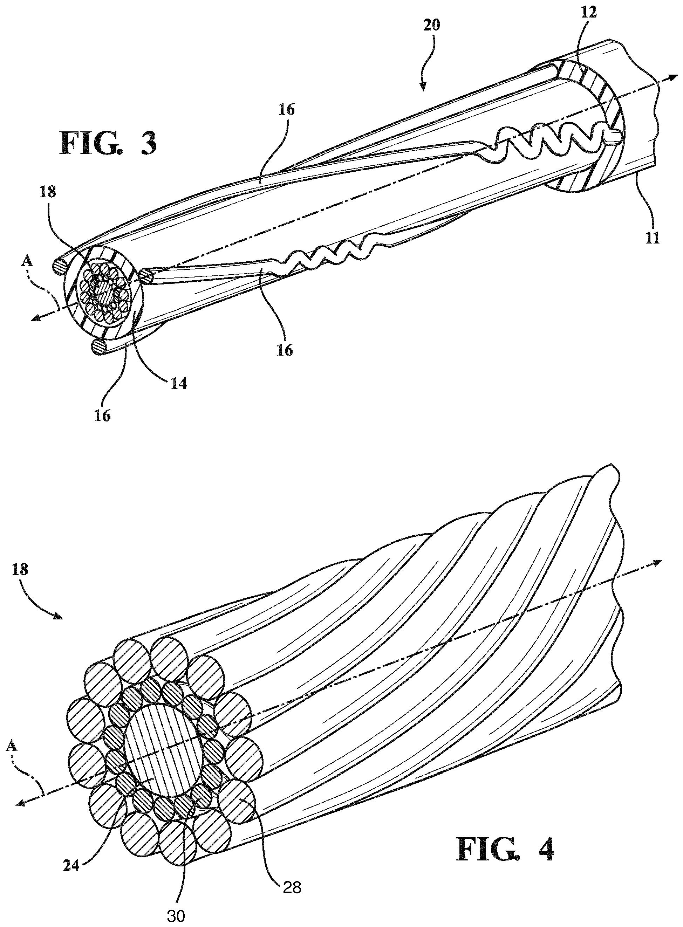

As best shown in FIGS. 2 and 3, the remote control assembly 10 includes a conduit 11 defining an interior and a length. The conduit 11 typically includes a sheath 12 defining the interior of the conduit 11 and the length. In one embodiment, the sheath 12 is comprised of organic polymer material, such as, but not limited to, nylon or polyamide nylon. The conduit 11 may additionally include a liner 14 disposed within the interior of the sheath 12 and coupled to the sheath 12 along the length. The liner 14 defines an opening along the length. The liner 14 is typically comprised of organic polymer material, such as, but not limited to, polytetrafluoroethylene or high-density polyethylene.

The conduit 11 also typically includes at least one support wire 16 disposed between and coupled to the sheath 12 and the liner 14. The sheath 12 typically encapsulates the support wire 16. As described above, when present, the sheath 12, the liner 14, and the support wire 16 collectively form the conduit 11. It is to be appreciated that the conduit 11 may be a single component or multiple components without departing from the nature of the present invention.

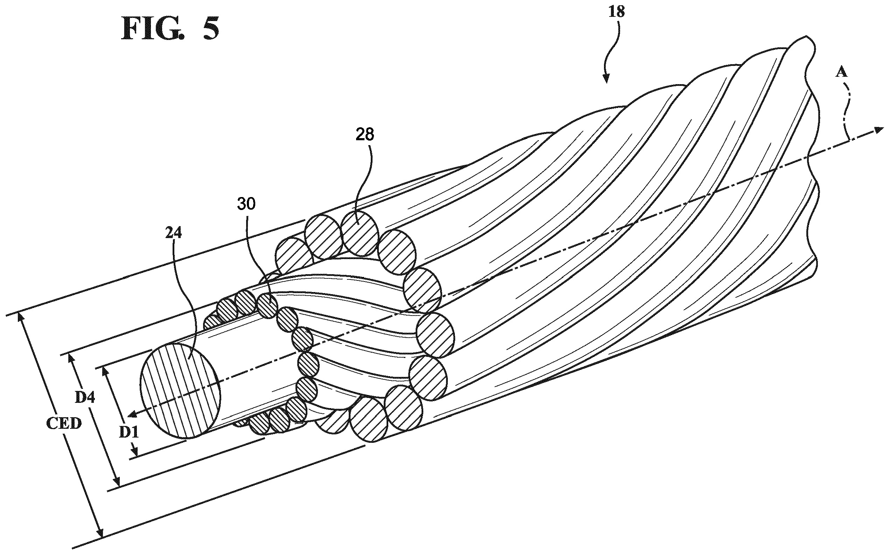

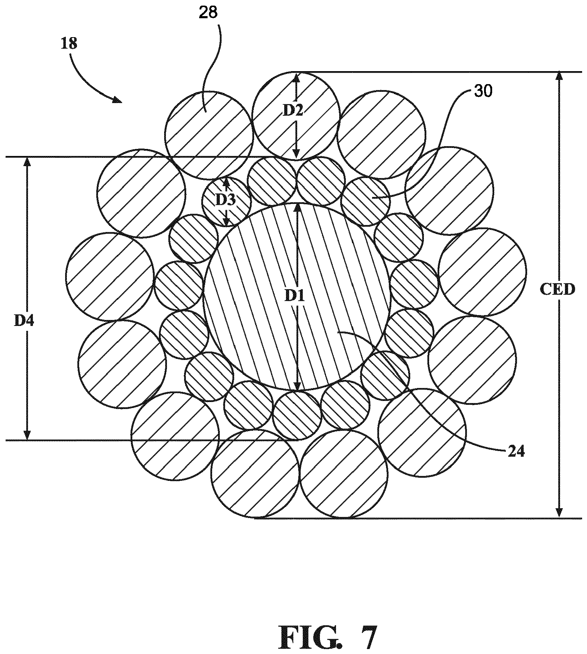

The remote control assembly 10 additionally includes a core element 18, as best shown in FIGS. 3-7, disposed and moveable within interior of the conduit 11. Specifically, the core element 18 is disposed and moveable within the opening of the liner 14 when the liner 14 is present. The core element 18 transmits motion along the length of the conduit 11. The liner 14, when present, ensures flexibility and low friction support to permit the core element 18 to slidably move therein. The conduit 11 and the core element 18 collectively form a cable 20.

The remote control assembly 10 typically further includes fittings 22 for supporting the cable 20, as shown in FIG. 1, and in particular the conduit 11, therebetween. The cable 20 and the fittings 22 collectively form the remote control assembly 10. The fittings 22 may be fitted to the conduit 11 in any suitable manner, such as, but not limited to, overmolding to mechanically interlock the fittings 22 to the sheath 12 of the conduit 11 or using traditional fasteners without departing from the nature of the present invention. When the fittings 22 are overmolded onto the sheath 12 of the conduit 11, the fittings 22 may be comprised of polymeric or plastic materials; for example, nylon, Teflon, synthetic elastomers, polyvinyls, polyethylene, polypropylene, or their copolymers. It is to be appreciated that when the fittings 22 are fastened to the sheath 12 of the conduit 11 using traditional fasteners or any other suitable ways, the fittings 22 may comprise of a material other than the polymeric or plastic materials listed above. It is to be appreciated that the fittings 22 shown in FIG. 1 are schematic and other variations of the fittings 22 may be used without departing from the nature of the present invention. It is to be further appreciated that the sheath 12, liner 14, and the at least one support wire 16 are merely illustrative and other variations of the sheath 12, liner 14, and the at least one support wire 16 may be used in combination with the core element 18 described below.

The core element 18, as best shown in FIGS. 4-7, includes a central wire 24 extending along a longitudinal axis A. The central wire 24 defines a first diameter D1 and a length L extending along longitudinal axis A. The core element 18 also includes a plurality of outer wires 28 surrounding and coupled to the central wire 24 along the length L. Each of the outer wires 28 defines a second diameter D2. The second diameter D2 is less than the first diameter D1.

The core element 18 additionally includes a plurality of intermediate wires 30 surrounding and coupled to the central wire 24 along the length L. The plurality of intermediate wires 30 are also coupled to the plurality of outer wires 28 along the length L such that the plurality of intermediate wires 30 is sandwiched between both the central wire 24 and the plurality of outer wires 28. Each of the intermediate wires 30 defines a third diameter D3. The third diameter D3 is less than the second diameter D2.

The central wire 24, plurality of intermediate wires 30, and plurality of outer wires 28 collectively define a core element diameter CED. The central wire 24 and the plurality of intermediate wires 30 collectively define an intermediate diameter D4. As described in further detail below, the first diameter D1 being greater than the second diameter D2 and the third diameter D3 provides high column strength for the core element 18. The plurality of intermediate wires 30 provide support for increasing fatigue strength of the core element 18. The plurality of outer wires 28 provides support for the plurality of intermediate wires 30, increase column strength of the core element 18, improves flexibility of the core element 18, and provides enough robustness such that the core element 18 may be swaged for attaching the core element 18 to the fittings 22. Having a robust core element 18 and, in particular, a robust plurality of outer wires 28 helps reduce failure of the core element 18 at the fittings 22.

In one embodiment, the plurality of intermediate wires 30 surround the central wire 24 with each of the intermediate wires 30 engaging two other intermediate wires 30 about the central wire 24 along length L. In another embodiment, the plurality of outer wires 28 surround the intermediate wires 30 with each of the outer wires 28 engaging two other outer wires 28 about the intermediate wires 30 along length L.

The plurality of intermediate wires 30 may be further defined as an odd number of intermediate wires 30. When the plurality of intermediate wires 30 is further defined as an odd number of intermediate wires 30, the central wire 24 is evenly supported about longitudinal axis A along length L. Even support of the central wire 24 prevents failure of the central wire 24, which typically fails first under high tension, during use of the core element 18. When the plurality of intermediate wires 30 is further defined as an odd number of intermediate wires 30, the plurality of intermediate wires 30 may be further defined as 15 intermediate wires 30. An odd number of intermediate wires 30 is advantageous over an even number of intermediate wires 30, since an even number of intermediate wires 30 would not provide even support for the central wire 24 about longitudinal axis A along length L.

The plurality of outer wires 28 may be further defined as an odd number of outer wires 28. When the plurality of outer wires 28 is further defined as an odd number of outer wires 28, the central wire 24 and the plurality of intermediate wires 30 are evenly supported about longitudinal axis A along length L. Even support of the plurality of intermediate wires 30 prevents failure of the central wire 24 during use of the core element 18. When the plurality of outer wires 28 is further defined as an odd number of outer wires 28, the plurality of outer wires 28 may be further defined as 13 outer wires 28. An odd number of outer wires 28 is advantageous over an even number of outer wires 28, since an even number of outer wires 28 may not provide even support for the plurality of intermediate wires 30 and the central wire 24 about longitudinal axis A along length L.

The plurality of intermediate wires 30 may be directly engaged with the central wire 24 along length L. The plurality of outer wires 28 may be directly engaged with the plurality of intermediate wires 30 along length L. In one embodiment, the plurality of intermediate wires 30 are directly engaged with the plurality of outer wires 28 and the central wire 24 along length L. Typically, the core element 18 is free of linings between the central wire 24 and the intermediate wires 30, and the intermediate wires 30 and the outer wires 28. The core element 18 is typically free of an outer lining encapsulating the plurality of outer wires 28. When the core element 18 is free of linings and an outer lining, the core element 18 is easier and cheaper to construct than when the core element 18 has linings and an outer lining. When the plurality of intermediate wires 30 directly engage the central wire 24 and the plurality of outer wires 28, the central wire 24, the plurality of intermediate wires 30, and the plurality of outer wires 28 may be coupled to one another as described below.

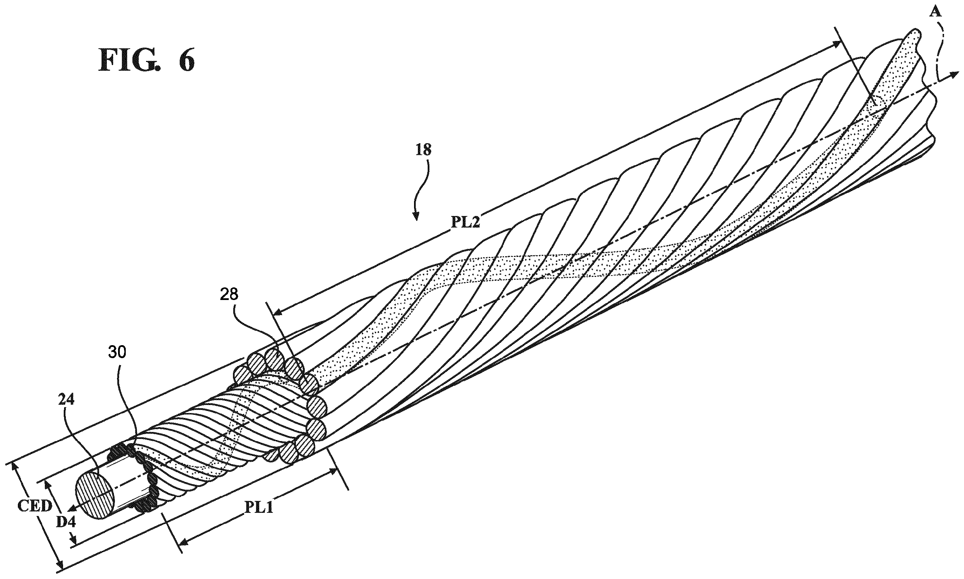

As best shown in FIG. 6, each of the intermediate wires 30 are helically disposed about the central wire 24 along length L and each of the outer wires 28 are helically disposed about the central wire 24 along length L. Typically, each of the outer wires 28 are helically disposed about the central wire 24 opposite the intermediate wires 30. When each of the outer wires 28 are helically disposed about the plurality of intermediate wires 30 along length L, the plurality of outer wires 28 define a channel with the plurality of intermediate wires 30 disposed within the channel. When each of the intermediate wires 30 are helically disposed about the central wire 24, the central wire 24 is surrounded by the plurality of intermediate wires 24 and disposed within the channel. When present, the helical disposal of each of the intermediate wires 30 about the central wire 24 along length L and the helical disposal of each of the outer wires 28 about the plurality of intermediate wires 30 along length L couples the central wire 24, the plurality of intermediate wires 30, and the plurality of outer wires 28 to one another.

As best shown in FIG. 6, when the plurality of intermediate wires 30 are helically disposed about the central wire 24, in one embodiment, each of the plurality of intermediate wires 30 are helically disposed about the central wire 24 at a predetermined intermediate pitch length PL1 as measured relative to the longitudinal axis of the central wire 24. The intermediate pitch length PL1 is the length along the longitudinal axis required for each intermediate wire 30 to complete a single 360° revolution around the central wire 24. As shown in FIG. 6, one of the intermediate wires 30 is shaded to show the single 360° revolution around the central wire 24, which defines the intermediate pitch length PL1. When the plurality of outer wires 28 are helically disposed about the central wire 24, each of the plurality of outer wires 28 are helically disposed about the central wire 24 at a predetermined outer pitch length PL2 as measured relative to the longitudinal axis of the central wire 24. The outer pitch length PL2 is the length along longitudinal axis A required for each outer wire 28 to complete a single 360° revolution around the plurality of intermediate wires 30. As also shown in FIG. 6, one of the outer wires 28 is shaded to show the single 360° revolution around the plurality of intermediate wires 30, which defines the outer pitch length PL2. In one embodiment, the outer pitch length PL2 is greater than the intermediate pitch length PL1.

In one embodiment, the intermediate pitch length PL1 is from about 5 to 5.2 times the intermediate diameter D4. In another embodiment, the outer pitch length PL2 is 10 times the core element diameter CED.

When present, the pitch of the plurality of outer wires 28 and the pitch of the plurality of intermediate wires 30 ensures that the central wire 24 is surrounded along length L, which keeps the central wire 24 coupled to the plurality of intermediate wires 30. The pitch of both the plurality of outer wires 28 and the plurality of intermediate wires 30 is typically selected based on the tolerance of the core element 18. For example, if the tolerance of the core element 18 is higher, i.e., the tolerance of the core element diameter CED, the outer pitch length PL2 of plurality of outer wires 28 and/or intermediate pitch length PL1 the plurality of intermediate wires 30 may be higher. On the other hand, if the tolerance of the core element 18 is lower, i.e., the tolerance of the core element diameter CED, the outer pitch length PL2 of the plurality of outer wires 28 and/or the intermediate pitch length PL1 of the plurality of intermediate wires 30 is lower. The tolerance of the core element 18 is largely dependent on the first diameter D1 of the central wire 24, which, in turn, determines the desired pitch for the plurality of outer wires 28 and/or the plurality of intermediate wires 30.

As mentioned above, the core element 18 may be free of linings between the central wire 24 and the intermediate wires 30, and between the intermediate wires 30 and the outer wires 28. As described above, the core element 18 may be free of an outer lining encapsulating the plurality of outer wires 28. The pitch of the plurality of intermediate wires 30 helps secure the central wire 24, and the pitch of the plurality of outer wires 28 helps secure the central wire 24 and the plurality of intermediate wires 30 within the plurality of outer wires 28 such that core element 18 may be free of linings between the central wire 24 and plurality of intermediate wires 30, and between the plurality of intermediate wires 30 and the plurality of outer wires 28. It is to be appreciated that the core element 18 may include a lining between the central wire 24 and the plurality of intermediate wires 30 and/or a lining between the plurality of intermediate wires 30 and the plurality of outer wires 28 without departing from the nature of the present invention. For example, in one embodiment, the core element 18 may have an outer lining for encapsulating the plurality of outer wires 28. In this embodiment, the outer lining may be a nylon such that the plurality of outer wires 28 are nylon jacketed.

When the core element 18 is free of linings, manufacturing of the core element 18 is faster and cheaper than when linings are present, since fewer components are needed to make the core element 18.

Typically, the central wire 24, each of the intermediate wires 30, and each of the outer wires 28 are solid, i.e., one piece. In some applications of the core element 18, such as a push pull applications, greater column strength of the core element 18 is needed and, therefore, a solid, one piece central wire 24, intermediate wires 30, and outer wires 28 is typically utilized. It is to be appreciated that the central wire 24, plurality of intermediate wires 30, and plurality of outer wires 28 may each be multiple strands of wire, i.e., not one piece.

The central wire 24, plurality of intermediate wires 30, and plurality of outer wires 28 may be comprised of the same material. For example, the central wire 24, plurality of intermediate wires 30, and plurality of outer wires 28 may be comprised of high carbon steel, very high carbon steal, plow steal, improved plow steal, extra improved plow steel, and extra, extra improved plow steel. Typically, the steel comprises about 70 to 80 percent carbon and has a tensile strength of about 300,000 psi. For example, the central wire 24, each of the intermediate wires 30, and each of the outer wires 28 may be music wire - ASTM A228. It is to be appreciated that the central wire 24, plurality of intermediate wires 30, and plurality of outer wires 28 may be comprised of other suitable materials without departing from the nature of the present invention.

The central wire 24 may be an oil tempered steel. The plurality of intermediate wires 30 and the plurality of outer wires 28 may be high carbon steel / galvanized plated high carbon steel.

As described above, the central wire 24, the plurality of intermediate wires 30, and the plurality of outer wires 28 collectively define the core element diameter CED. The core element diameter CED is defined by the following formula:

$$CED = D1 + (2*D2) + (2*D3),$$

where, as described above, CED is the core element diameter, D1 is the first diameter, D2 is the second diameter, and D3 is the third diameter. According to the invention, the core element 18 is such that the first diameter D1 is 41.5% to 43.5% of the core element diameter CED. Depending on the required column strength, the first diameter D1 is adjusted accordingly. For example, when higher column strength is required, the first diameter D1 of the central wire 24 is closer to 43.5% of the core element diameter CED than to 41.5% of the core element diameter CED. When lower column strength is required, the first diameter D1 is closer to 41.5% of the core element diameter CED than to 43.5% of the core element diameter CED. According to the invention, the third diameter D3 is from about 10.5% to 10.7% of the core element diameter CED. According to the invention, the second diameter D2 is from about 17.5% to 18.5% of the core element diameter CED.

In one embodiment, the first diameter D1 is equal to 43.5% percent of the core element diameter CED, the third diameter D3 is equal to 10.5% to 10.7% of the core element diameter CED, and the second diameter D2 is equal to 17.55% to 17.75% of the core element diameter CED. In another embodiment, the first diameter D1 is equal to 43.5% percent of the core element diameter CED, the third diameter D3 is equal to 10.6% of the core element diameter CED, and the second diameter D2 is equal to 17.65% of the core element diameter (CED).

As described above, the first diameter D1 is chosen based on the required column strength of the core element 18. Typically, the second diameter D2 and the third diameter D3 are adjusted depending on the first diameter D1 and, when the first diameter D1 is adjusted, the core element diameter CED remains the same. In other words, if the first diameter D1 increases, both the second diameter D2 and the third diameter D3 decrease, and if the first diameter D1 decreases, both the second diameter D2 and the third diameter D3 increase in order to keep the same core element diameter CED. For example, if the core element diameter CED is 3.25mm, using the percentages disclosed above, the first diameter D1 is 1.414mm (43.5%), the third diameter D3 is 0.3445mm (10.6%), and the second diameter D2 is 0.5736mm (17.65%). If the first diameter D1 were to decrease, both the second diameter D2 and the third diameter D3 would increase from previous values of 0.5736 mm and 0.3445 mm, respectively, to maintain the same core element diameter CED. It is to be appreciated that the core element diameter CED may have a diameter less than 3.25mm or greater than 3.25mm without departing from the nature of the present invention. Also, if the first diameter D1 decreases, it is to be appreciated that only the second diameter D2 may increase or only the third diameter D3 may increase to maintain the same core element diameter CED without departing from the nature of the present invention. Further, if the first diameter D1 increases, it is to be appreciated that only the second diameter D2 may decrease or only the third diameter D3 may decrease without departing from the nature of the present invention.

The core element 18, by using the central wire 24 that has the first diameter D1 greater than the second diameter D2 of the plurality of outer wires 28 and with the second diameter D2 being greater than the third diameter D3 of the plurality of intermediate wires 30 allows the core element 18 to meet the proper tension, compression, and fatigue limit requirements needed during operation, such as use in a shifter cable. Depending on requirements for the core element 18, the percentages of the first diameter D1, the second diameter D2, and the third diameter D3 can be adjusted. For example, if more flexibility of the core element 18 is needed, the first diameter D1 is decreased to, for example, 41.5 % of the core element diameter CED. If the core element 18 needs higher column strength, then the first diameter D1 is increased to, for example, 43.5%. Using the above percentages provides the core element 18 with the required column strength, flexibility, and fatigue needed for many applications, such as push pull cables.

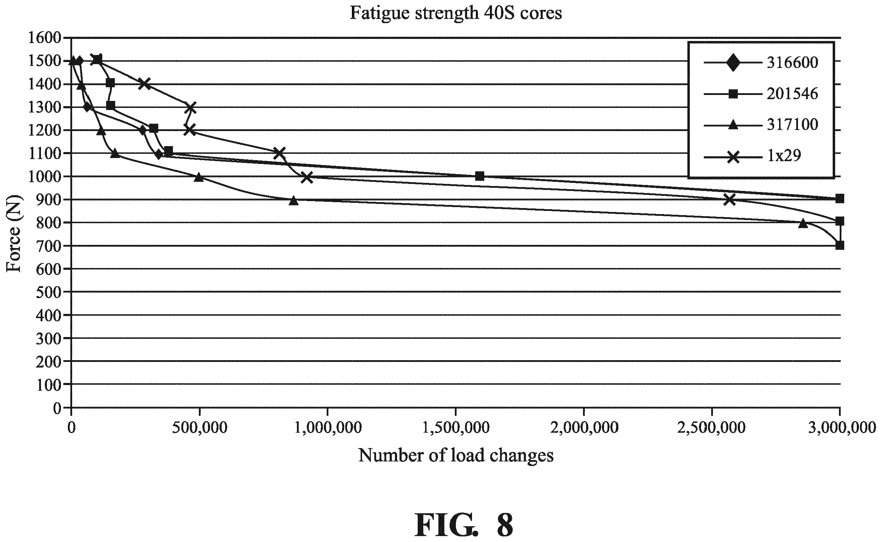

FIG. 8 represents an s-n curve for three known core elements and the core element 18 described herein, all of which were tested with the same core element diameter CED. The 1x29 line represents the core element 18 described herein. The 317100 line represents a 1x31 strand comprising a central wire, 12 intermediate wires, and 18 outer wires, the 201546 line represents an "armored core" core element without a coating, and the 316600 line represents an "armored core" core element with a plastic coating (all three collectively referred to as "the other three core elements"). As shown in FIG. 8, the 1x29 core element 18 outperformed the other three core elements at high load fatigue resistance, and showed similar load resistance at lower loads as the other three core elements (outperforming the 1x31 strand). The 201546 line and the 316600 line represent core elements comprising more components than the core element 18 described herein. As shown in FIG. 8, the core element 18 described herein outperforms both of these core elements at higher loads, and performs similarly to these two core elements at lower loads. As such, the core element 18 described herein has the required tensile and fatigue strength for use in a push pull cable as the other three core elements. The core element 18 described herein is advantageous to the other three core elements, since the core element 18 has fewer components (the central wire 24, the plurality of outer wires 28, and the plurality of intermediate wires 30) than the other three core elements. Having fewer components than the other three core elements greatly reduces the overall manufacturing cost and time to produce the core element 18.

It is to be appreciated that the intermediate pitch length PL1 of each intermediate wire and the outer pitch length PL2 of each outer wire 28 shown throughout the Figures are merely illustrative and may not be drawn to scale. It is to be further appreciated that the first diameter (D1) of the central wire 24, the second diameter (D2) of each of the plurality of outer wires 28, the third diameter (D3) of each of the plurality of intermediate wires 30, the intermediate diameter (D4), the core element diameter (CED), and the length L are merely illustrative and may not be drawn to scale. The invention has been described in an illustrative manner, and it is to be understood that the terminology which has been used is intended to be in the nature of words of description rather than of limitation.

**Claims**

1. A cable of a remote control assembly, said cable comprising:

a conduit (11) defining an interior and a length; and
a core element (18) disposed within the interior of the conduit (11), said core element (18) comprising:

a central wire (24) extending along a longitudinal axis (A) with said central wire (24) defining a first diameter (D1) and a length (L) extending along said longitudinal axis (A),
a plurality of outer wires (28) surrounding and coupled to said central wire (24) along said length with each of said outer wires (28) defining a second diameter (D2) less than said first diameter (D1), and
a plurality of intermediate wires (30) surrounding and coupled to said central wire (24) along said length and coupled to said plurality of outer wires (28) along said length such that said plurality of intermediate wires (30) is sandwiched between both said central wire (24) and said plurality of outer wires (28),
wherein each of said intermediate wires (30) define a third diameter (D3) less than said second diameter (D2), wherein said plurality of intermediate wires (30) surround said central wire (24) with each of said intermediate wires (30) engaging two other of said intermediate wires (30) about said central wire (24) along said length,
wherein said plurality of outer wires (28) surround said intermediate wires (30) with each of said outer wires (28) engaging two other of said outer wires (28) about said intermediate wires (30) along said length,

**characterized in that** said central wire (24), said plurality of intermediate wires (30), and said plurality of outer wires (28) collectively define a core element diameter with said core element diameter defined by the following formula:

$$CED = D1 + (2 * D2) + (2 * D3);$$

wherein,

CED is said core element diameter,
D1 is said first diameter,
D2 is said second diameter, and
D3 is said third diameter;

wherein said D1 is 41.5% to 43.5% of said CED, wherein said D3 is from about 10.5% to 10.7% of said CED, and wherein said D2 is from about 17.5% to 18.5% of said CED.

2. The cable as set forth in claim 1, wherein said D1 is equal to 43.5% of said CED, said D3 is equal to 10.5% to 10.7% of said CED, and said D2 is equal to 17.55% to 17.75% of said CED.

3. The cable as set forth in any one of the claims 1 or 2, wherein said central wire (24) and said plurality of intermediate wires (30) collectively form an intermediate diameter D4, and wherein each of said plurality of intermediate wires (30) are helically disposed about said central wire (24) at a predetermined intermediate pitch length (PL1) as measured relative to said longitudinal axis of said central wire (24) with said intermediate pitch length (PL1) being of from about 5 to 5.2 times said intermediate diameter (D4).

4. The cable as set forth in any one of claims 1 and 3 wherein said central wire (24), said plurality of intermediate wires (30), and said plurality of outer wires (28) collectively define a core element diameter, and wherein each of said plurality of outer wires (28) are helically disposed about said central wire (24) at a predetermined outer pitch length (PL1)as measured relative to said longitudinal axis of said central wire (24) with said outer pitch length (PL1) being about 10 times said core element diameter.

5. The cable as set forth in any one of the preceding claims wherein each of said intermediate wires (30) are helically disposed about said central wire (24) along said length (L) and said outer wires (28) are helically disposed about said central wire (24) along said length (L) opposite said intermediate wires (30) .

6. The cable as set forth in any one of the preceding claims wherein said plurality of outer wires (28) are helically disposed about said central wire (24) at a predetermined outer pitch length (PL2) as measured relative to said longitudinal axis of said central wire (24), and said plurality of intermediate wires (30) are helically disposed about said central wire (24) at a predetermined intermediate pitch length (PL1) as measured relative to said longitudinal axis of said central wire (24) with said outer pitch length (PL2) greater than said intermediate pitch length (PL1).

7. The cable as set forth in any one of the preceding claims wherein said plurality of intermediate wires (30) is further defined as an odd number of said intermediate wires (30) , and said plurality of outer wires (28) is further defined as an odd number of said outer wires (28).

8. The cable as set forth in any one of the preceding claims wherein said plurality of outer wires (28) is further defined as 13 of said outer wires (28), and said plurality of intermediate wires (30) is further defined as 15 of said intermediate wires (30) .

9. The cable as set forth in any one of the preceding claims wherein said plurality of intermediate wires (30) are directly engaged with said central wire along said length, and said plurality of outer wires (28) are directly engaged with said plurality of intermediate wires (30) along said length.

10. The cable as set forth in any one of the preceding claims wherein said core element (18) is free of linings between said central wire (24) and said intermediate wires (30), and between said intermediate wires (30) and said outer wires (28).

11. The cable as set forth in any one of the preceding claims wherein said core element (18) is free of an outer lining encapsulating said plurality of outer wires (28).

**Patentansprüche**

1. Kabel einer Fernbedienungsanordnung, wobei das Kabel umfasst:

eine Leitung (11), die ein Inneres und eine Länge definiert; und
ein Kernelement (18), das im Inneren der Leitung (11) angeordnet ist, wobei das Kernelement (18) umfasst:

einen zentralen Draht (24), der sich entlang einer Längsachse (A) erstreckt, wobei der zentrale Draht (24) einen ersten Durchmesser (D1) und eine Länge (L) definiert, die sich entlang der Längsachse (A) erstreckt, eine Vielzahl an äußeren Drähten (28), die entlang der Länge den zentralen Draht (24) umgeben und mit diesem gekoppelt sind, wobei jeder der äußeren Drähte (28) einen zweiten Durchmesser (D2) definiert, der kleiner ist als der erste Durchmesser (D1), und
eine Vielzahl an Zwischendrähten (30), die entlang der Länge den zentralen Draht (24) umgeben und mit diesem gekoppelt sind und die ferner mit der Vielzahl an äußeren Drähten (28) entlang der Länge gekoppelt sind, so dass die Vielzahl an Zwischendrähten (30) zwischen beiden, dem zentralen Draht (24) und der Vielzahl an äußeren Drähten (28), sandwichartig angeordnet ist,
wobei jeder der Zwischendrähte (30) einen dritten Durchmesser (D3) definiert, der kleiner ist als der zweite Durchmesser (D2),
wobei die Vielzahl an Zwischendrähten (30) den zentralen Draht (24) umgibt, wobei jeder der Zwischendrähte (30) um den zentralen Draht (24) entlang der Länge an zwei weiteren der Zwischendrähte (30) anliegt, wobei die Vielzahl an äußeren Drähten (28) die Zwischendrähte (30) umgibt, wobei jeder der äußeren Drähte (28) um die Zwischendrähte (30) entlang der Länge an zwei weiteren der äußeren Drähte (28) anliegt, **dadurch gekennzeichnet, dass** der zentrale Draht (24), die Vielzahl an Zwischendrähten (30), und die Vielzahl an äußeren Drähten (28) gemeinsam einen Kernelementdurchmesser definieren, wobei der Kernelementdurchmesser durch die folgende Formel definiert ist:

$$CED = D1 + (2 * D2) + (2 * D3);$$

wobei,

CED der Kernelementdurchmesser ist,

D1 der erste Durchmesser ist,

D2 der zweite Durchmesser ist, und

D3 der dritte Durchmesser ist;

wobei D1 41,5% bis 43,5% des CED beträgt, wobei D3 ungefähr 10,5% bis 10,7% des CED beträgt, und wobei D2 ungefähr 17,5% bis 18,5% des CED beträgt.

2. Kabel nach Anspruch 1, wobei D1 43.5% des CED beträgt, wobei D3 10,5% bis 10,7% des CED beträgt und wobei D2 17,55% bis 17,75% des CED beträgt.

3. Kabel nach einem der Ansprüche 1 oder 2, wobei der zentrale Draht (24) und die Vielzahl an Zwischendrähten (30) gemeinsam einen Zwischendurchmesser D4 bilden, und wobei jeder der Vielzahl an Zwischendrähten (30) helixartig um den zentralen Draht (24) bei einer vorbestimmten Zwischensteigungslänge (PL1) gemessen in Bezug auf die Längsachse des zentralen Drahts (24) angeordnet ist, wobei die Zwischensteigungslänge (PL1) ungefähr dem 5 bis 5,2-fachen des Zwischendurchmessers (D4) entspricht.

4. Kabel nach einem der Ansprüche 1 bis 3, wobei der zentrale Draht (24), die Vielzahl an Zwischendrähten (30), und die Vielzahl an äußeren Drähten (28) gemeinsam einen Kernelementdurchmesser definieren, und wobei jeder der Vielzahl an äußeren Drähten (28) helixartig um den zentralen Draht (24) bei einer vorbestimmten äußeren Steigungslänge (PL1) gemessen in Bezug auf die Längsachse des zentralen Drahts (24) angeordnet ist, wobei die äußere Steigungslänge (PL1) ungefähr dem 10-fachen des Kernelementdurchmessers entspricht.

5. Kabel nach einem der der vorhergehenden Ansprüche, wobei jeder der Zwischendrähte (30) helixartig um den zentralen Draht (24) entlang der Länge (L) angeordnet ist und wobei die äußeren Drähte (28) helixartig um den zentralen Draht (30) entlang der Länge (L) gegenüber den Zwischendrähten (30) angeordnet sind.

6. Kabel nach einem der der vorhergehenden Ansprüche, wobei die Vielzahl an äußeren Drähten (28) helixartig um den zentralen Draht (24) bei einer vorbestimmten äußeren Steigungslänge (PL2) gemessen in Bezug auf die Längsachse des zentralen Drahts (24) angeordnet sind, und wobei die Vielzahl an Zwischendrähten (30) helixartig um den zentralen Draht (24) bei einer vorbestimmten Zwischensteigungslänge (PL1) gemessen in Bezug auf die Längsachse des zentralen Drahts (24) angeordnet ist, wobei die äußere Steigungslänge (PL2) größer als die Zwischensteigungslänge (PL1) ist.

7. Kabel nach einem der vorhergehenden Ansprüche, wobei die Vielzahl an Zwischendrähten (30) weiterhin als eine ungerade Anzahl an Zwischendrähten (30) definiert ist, und wobei die Vielzahl an äußeren Drähten (28) weiterhin als eine ungerade Anzahl an äußeren Drähten (28) definiert ist.

8. Kabel nach einem der vorhergehenden Ansprüche, wobei die Vielzahl an äußeren Drähten (28) weiterhin als 13 der äußeren Drähte (28) definiert ist, und wobei die Vielzahl an Zwischendrähten (30) weiterhin als 15 der Zwischendrähte (30) definiert ist.

9. Kabel nach einem der vorhergehenden Ansprüche, wobei die Vielzahl an Zwischendrähten (30) entlang der Länge direkt an dem zentralen Draht anliegt, und wobei die Vielzahl an äußeren Drähten (28) entlang der Länge direkt an der Vielzahl an Zwischendrähten (30) anliegt.

10. Kabel nach einem der vorhergehenden Ansprüche, wobei das Kernelement (18) frei ist von einer Auskleidung zwischen dem zentralen Draht (24) und den Zwischendrähten (30), und zwischen den Zwischendrähten (30) und den äußeren Drähten (28) .

11. Kabel nach einem der vorhergehenden Ansprüche, wobei das Kernelement (18) frei ist von einer äußeren Auskleidung, die die Vielzahl an äußeren Drähten (28) einkapselt.

**Revendications**

1. Câble d'un ensemble de commande à distance, ledit câble comprenant :

un conduit (11) définissant un intérieur et une longueur ; et

un élément formant âme (18) disposé dans l'intérieur du conduit (11), ledit élément formant âme (18) comprenant :

un fil central (24) s'étendant le long d'un axe longitudinal (A), ledit fil central (24) définissant un premier diamètre (D1) et une longueur (L) s'étendant le long dudit axe longitudinal (A),

une pluralité de fils extérieurs (28) entourant et couplés audit fil central (24) le long de ladite longueur, chacun desdits fils extérieurs (28) définissant un deuxième diamètre (D2) inférieur audit premier diamètre (D1), et

une pluralité de fils intermédiaires (30) entourant et couplés audit fil central (24) le long de ladite longueur et couplés à ladite pluralité de fils extérieurs (28) le long de ladite longueur de sorte que ladite pluralité de fils intermédiaires (30) est prise en sandwich à la fois entre ledit fil central (24) et ladite pluralité de fils extérieurs (28), dans lequel chacun desdits fils intermédiaires (30) définit un troisième diamètre (D3) inférieur audit deuxième diamètre (D2), dans lequel ladite pluralité de fils intermédiaires (30) entoure ledit fil central (24), chacun desdits fils intermédiaires (30) mettant en prise deux autres desdits fils intermédiaires (30) autour dudit fil central (24) le long de ladite longueur,

dans lequel ladite pluralité de fils extérieurs (28) entoure lesdits fils intermédiaires (30), chacun desdits fils extérieurs (28) mettant en prise deux autres desdits fils extérieurs (28) autour desdits fils intermédiaires (30) le long de ladite longueur,

**caractérisé en ce que** ledit fil central (24), ladite pluralité de fils intermédiaires (30) et ladite pluralité de fils extérieurs (28) définissent collectivement un diamètre d'élément formant âme, ledit diamètre d'élément formant âme étant défini par la formule suivante :

$$CED = D1 + (2 * D2) + (2 * D3) ;$$

dans laquelle,

CED est ledit diamètre d'élément formant âme,
D1 est ledit premier diamètre,
D2 est ledit deuxième diamètre, et
D3 est ledit troisième diamètre ;
dans lesquels ledit D1 fait 41,5 % à 43,5 % dudit CED, dans lesquels ledit D3 fait environ 10,5 % à 10,7 % dudit CED et dans lesquels ledit D2 fait environ 17,5 % à 18,5 % dudit CED.

2. Câble selon la revendication 1, dans lequel ledit D1 est égal à 43,5 % dudit CED, ledit D3 est égal à 10,5 % à 10,7 % dudit CED et ledit D2 est égal à 17,55 % à 17,75 % dudit CED.

3. Câble selon l'une quelconque des revendications 1 ou 2,
dans lequel ledit fil central (24) et ladite pluralité de fils intermédiaires (30) forment collectivement un diamètre intermédiaire D4, et dans lequel chacun de ladite pluralité de fils intermédiaires (30) est disposé en hélice autour dudit fil central (24) à une longueur de pas intermédiaire prédéterminée (PL1) telle que mesurée par rapport audit axe longitudinal dudit fil central (24), ladite longueur de pas intermédiaire (PL1) faisant environ 5 à 5,2 fois ledit diamètre intermédiaire (D4).

4. Câble selon l'une quelconque des revendications 1 et 3, dans lequel ledit fil central (24), ladite pluralité de fils intermédiaires (30) et ladite pluralité de fils extérieurs (28) définissent collectivement un diamètre d'élément formant âme, et dans lequel chacun de ladite pluralité de fils extérieurs (28) est disposé en hélice autour dudit fil central (24) à une longueur de pas extérieur prédéterminée (PL1) telle que mesurée par rapport audit axe longitudinal dudit fil central (24), ladite longueur de pas extérieur (PL1) faisant environ 10 fois ledit diamètre d'élément formant âme.

5. Câble selon l'une quelconque des revendications précédentes, dans lequel chacun desdits fils intermédiaires (30) est disposé en hélice autour dudit fil central (24) le long de ladite longueur (L) et lesdits fils extérieurs (28) sont disposés en hélice autour dudit fil central (24) le long de ladite longueur (L) opposée auxdits fils intermédiaires (30).

6. Câble selon l'une quelconque des revendications précédentes, dans lequel ladite pluralité de fils extérieurs (28) est disposée en hélice autour dudit fil central (24) à une longueur de pas extérieur prédéterminée (PL2) telle que mesurée par rapport audit axe longitudinal dudit fil central (24), et ladite pluralité de fils intermédiaires (30) est disposée en hélice autour dudit fil central (24) à une longueur de pas intermédiaire prédéterminée (PL1) telle que mesurée par rapport audit axe longitudinal dudit fil central (24), ladite longueur de pas extérieur (PL2) étant plus grande que ladite longueur de pas intermédiaire (PL1).

7. Câble selon l'une quelconque des revendications précédentes, dans lequel ladite pluralité de fils intermédiaires (30) est en outre définie comme un nombre impair desdits fils intermédiaires (30) et ladite pluralité de fils extérieurs (28) est en outre définie comme un nombre impair desdits fils extérieurs (28).

8. Câble selon l'une quelconque des revendications précédentes, dans lequel ladite pluralité de fils extérieurs (28) est en outre définie comme 13 desdits fils extérieurs (28) et ladite pluralité de fils intermédiaires (30) est en outre définie comme 15 desdits fils intermédiaires (30).

9. Câble selon l'une quelconque des revendications précédentes, dans lequel ladite pluralité de fils intermédiaires (30) est directement en prise avec ledit fil central le long de ladite longueur et ladite pluralité de fils extérieurs (28) est directement en prise avec ladite pluralité de fils intermédiaires (30) le long de ladite longueur.

10. Câble selon l'une quelconque des revendications précédentes, dans lequel ledit élément formant âme (18) est exempt de doublures entre ledit fil central (24) et lesdits fils intermédiaires (30), et entre lesdits fils intermédiaires (30) et lesdits fils extérieurs (28).

11. Câble selon l'une quelconque des revendications précédentes, dans lequel ledit élément formant âme (18) est exempt d'une doublure extérieure encapsulant ladite pluralité de fils extérieurs (28).

FIG. 1

FIG. 2

**FIG. 3**

**FIG. 4**

FIG. 5

FIG. 6

FIG. 7

FIG. 8

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S56122814 U
- JP 2003021130 A

- EP 0834662 A2